# EUROPEAN PATENT APPLICATION

(11) **EP 3 892 601 A1**
(43) Date of publication of application: **13.10.2021**
(21) Application number: 19926187.6
(22) Date of filing: 14.11.2019
(51) Int. Cl.: C04B 35/495, C04B 35/50, C04B 35/622

(54) **RARE EARTH TANTALATE CERAMIC RESISTING CORROSION OF LOW MELTING POINT OXIDE AND PREPARATION METHOD THEREFOR**

(30) Priority: 26.04.2019 CN 201910345230
(71) Applicant: Kunming University Of Science And Technology, Kunming, Yunnan 650093 (CN)
(72) Inventor: FENG, Jing, Kunming, Yunnan 650093 (CN); CHEN, Lin, Kunming Yunnan Province-650093 (CN); CHONG, Xiaoyu, Kunming Yunnan Province-650093 (CN); WANG, Jun, Kunming Yunnan Province-650093 (CN)
(74) Representative: Canzler & Bergmeier Patentanwälte Partnerschaft mbB
(86) International application number: PCT/CN2019/118483
(87) International publication number: WO 2020/215699

(57) **Abstract**

A rare earth tantalate ceramic resisting corrosion of a low melting point oxide. The chemical general formula of the ceramic is RETaO4. A preparation method of the ceramic comprises: taking RE2O3 powder and Ta₂O₅ powder and adding a solvent for mixing, and performing ball milling on the mixture by using a ball mill to obtain powder A; drying the powder A, and then performing primary sieving to obtain powder B; placing the powder B in a mold for compaction and then pre-sintering same to form a block C, performing grinding by a grinding machine after the block C is cooled to room temperature, and then performing secondary sieving to obtain powder D; and sintering the powder D to obtain the rare earth tantalate ceramic. The rare earth tantalate ceramic obtained by using the technical solution has a high compactness, and a strong capacity of resisting the corrosion of the low melting point oxide.

## Description

### FIELD OF DISCLOSURE

The present disclosure relates to the technical field of thermal barrier coatings, in particular, to a rare earth tantalate ceramic resisting corrosion of a low melting point oxide and a preparation method thereof.

### BACKGROUND

Thermal barrier coatings are mainly applied in the aero-engine industry, to insulate heat, reduce the thermal mismatch between the coating and the alloy matrix, and effectively resist particle impact to protect the parts of the aero-engine in the high-temperature area, which requires good thermodynamic performances of thermal barrier coatings, such as low thermal conductivity, high thermal expansion coefficient, and high-temperature stability.

Currently, popular thermal barrier coatings mainly include yttria stabilized zirconia (YSZ) and rare earth zirconate (RE₂Zr₂O₇), but they all have certain shortcomings: YSZ has a low operating temperature (≦ 1200°C) and high thermal conductivity rate. Rare earth zirconates have the problem of low thermal expansion coefficient, which prompted researchers to look for thermal barrier coating materials that can replace the above-mentioned ceramic materials. In 2007, Professor Clarke's research group at Harvard University and Professor Levi from the University of California, Santa Barbara proposed that YTaO₄ ferroites are expected to be used as new thermal barrier coating materials. The research mainly focuses on the theoretical calculation of the crystal structure and luminescence performance of YTaO4 ferroites. In 2016, Wang et al. prepared a rare earth tantalate bulk material through a solid-phase reaction method, and concluded that the thermal conductivity of the rare earth tantalate bulk material is much lower than that of YSZ material. Many research and experimental conclusions by the researchers provide a theoretical basis for the application of rare earth tantalates in thermal barrier coatings.

The current preparation methods (such as hydrothermal method, solid-phase reaction method, etc.) of ceramic powder make the crystal structure of rare earth tantalate powder have certain microcracks and pores. When aero-engines fly over in harsh environments, such as in the sky above volcanic rocks, certain sand particles, floating dust, and fly ash will be inhaled from the front inlet. After testing, the chemical components of these silicate mineral particles are basically the same, which mainly include CaO, MgO, Al₂O₃, SiO₂ and a small amount of Ni and Fe oxides with a melting point of about 1200°C, which are called Calcium-Magnesium-Alumino-Silicate (CMAS). With the development of the aviation industry, the inlet temperature of the engine turbine is usually above 1200°C. When the inlet temperature is at 1200°C, the CMAS particles will melt. Therefore, the CMAS particles are also called low melting point oxides. After the CMAS particles melt, they will deposit on the surface of the thermal barrier coating and "slowly" penetrate the interior of the coating along the cracks in the coating. The brittle glass phase produced during the cooling process reduces the strain tolerance of the coating, which causes the coating to delamination and crack, and finally fails.

### SUMMARY

The present disclosure provides a rare earth tantalate ceramic resisting corrosion of a low melting point oxide and a preparation method thereof, to solve the problem that the conventional thermal barrier coating is prone to cracking in harsh environments.

Basic technical solutions of the present disclosure are as follows:
The present disclosure provides a rare earth tantalate ceramic resisting corrosion of a low melting point oxide. A general chemical formula of the ceramic is RETaO₄, a crystal structure of the ceramic has a monoclinic phase, a lattice space group of the ceramic is 12(5), and a density of the ceramic is greater than 98%.

The present disclosure further provides a rare earth ytterbium tantalate ceramic resisting corrosion of a low melting point oxide. The ceramic is sintered from Yb₂O₃ powder and Ta₂O₅ powder. A general chemical formula of the ceramic is YbTaO₄ or Yb₃TaO₇, a crystal structure of the ceramic has a single phase, and a density of the ceramic is greater than 97%.

The principles and effects of the basic technical solutions are as follows:
1. In the basic technical solutions, the density of the rare earth tantalate ceramic resisting corrosion of the low melting point oxide is greater than 98%, that is, the content of cracks and pores in the rare earth tantalate is very small, making low melting point oxides (such as calcium oxide, magnesium oxide, aluminum oxide and silicon oxide in the working environment of aircraft engines) cannot effectively penetrate the ceramic after melting at high temperature, preventing the penetration of molten oxides and the reaction with ceramic materials.
2. In this basic technical solutions, the crystal structure of the rare earth tantalate (RETaO₄) ceramic has a monoclinic phase and no other impurity phases, so the length of the grain boundary is uniform, that is, there is no too long or too short grain boundary. In this way, the size distribution of the crystal grains is uniform, and the microcracks between the crystal grains are correspondingly reduced, thereby improving the corrosion resistance of the rare earth tantalate to low melting point oxides.
3. The density of the rare earth ytterbium tantalate ceramic resisting corrosion of the low melting point oxide in the basic technical solutions is greater than 97%.
   That is, the content of cracks and pores in the rare earth ytterbium tantalate is very small, making low melting point oxides (such as calcium oxide, magnesium oxide, aluminum oxide and silicon oxide in the working environment of aircraft engines) cannot effectively penetrate the ceramic after melting at high temperature, preventing the penetration of molten oxides and the reaction with ceramic materials.
4. In the basic technical solutions, the crystal structure of the rare earth ytterbium tantalate (YbTaO₄ or Yb₃TaO₇) ceramic has a single phase and no other impurity phases, so the length of the grain boundary is uniform, that is, there is no too long or too short grain boundary. In this way, the size distribution of the crystal grains is uniform, and the microcracks between the crystal grains are correspondingly reduced, thereby improving the corrosion resistance of the rare earth ytterbium tantalate to low melting point oxides.

Further, RE is one or a combination of Sm, Eu, Gd, Dy, Ho, and Er.

Beneficial effects: The ionic radiuses of the above rare earth elements in this technical solution are large, all in the range of 0.100 to 0.116 nm. Therefore, when a variety of rare earth oxides react with tantalum oxide, the rare earth elements can replace each other in solid solution, thereby forming a single-phase rare earth tantalate as if using a single element. The ionic radiuses of other rare earth elements vary greatly. For example, Sc element has an ionic radius of 0.075 nm, which is much smaller than the radius of the other rare earth elements. An oxide of Sc element reacts with tantalum oxide at a high temperature to form a ceramic with a metastable monoclinic phase. When rare earth elements vary greatly, they cannot replace each other to form a substitutional solid solution, and the crystal structure of the generated ceramic is different from that of the other rare earth tantalates. Therefore, according to the inventor's experiments, it is proved that the reaction between rare earth oxides with huge ion differences and tantalum oxide may generate ceramics with two-phase or multi-phase, which has a certain adverse effect on the compactness of rare earth tantalate.

Further, the present disclosure provides a method for preparing a rare earth tantalate ceramic resisting corrosion of a low melting point oxide. The method includes the following operations:
operation (1): weighing RE₂O₃ powder and Ta₂O₅ powder with a molar ratio of RE:Ta being 1:1 and adding to a solvent to mix, ball milling the mixed solution with a ball mill, and drying the mixed solution to obtain powder A;
operation (2): drying the powder A obtained in operation (1), and sieving the powder A for a first time to obtain powder B;
operation (3): placing the powder B obtained in operation (2) in a mold for compaction, holding a pressure, and pre-sintering the powder B to form a block C, a holding pressure ranges from 200 to 300 MPa, a holding-pressure time ranges from 1 to 10 min, a pre-sintering temperature ranges from 800 to 1200 °C, and a pre-sintering time ranges from 10 to 20 h;
operation (4): cooling the block C in operation (3) to room temperature, grounding the block C with a grinder, and sieving the block C for a second time to obtain powder D; and
operation (5): sintering the powder D in operation (4) to obtain the rare earth tantalate ceramic resisting corrosion of the low melting point oxide, a sintering temperature ranges from 1500 to 1800 °C, and a pressure sintering time ranges from 5 to 30 min.

Beneficial effects: The rare earth tantalate (RETaO₄) ceramic block with a density greater than 98% is obtained through the processes of operation (1) to operation (5). The obtained ceramic has fewer internal micro-cracks and low porosity, and can resist the corrosion of low melting point CMAS oxide at high temperature when used as a thermal barrier coating.

The RE₂O₃ powder and Ta₂O₅ powder are mixed uniformly through operation (1), and the addition of solvent can reduce the surface activity of the RE₂O₃ powder and Ta₂O₅ powder and reduce the adhesion between the powders.

The solvent in powder A is removed through operation (2), while sieving out the large particles that may be bonded together in operation (1) to ensure the compactness of the final sintered mass.

The gas in powder B can be discharged under pressure by holding the pressure of powder B in operation (3), thereby reducing the pores in the crystal structure of block C. A part of the internal energy in the powder can be consumed through pre-sintering, thereby reducing the sintering activity of powder B, increasing the reaction temperature of powder B, which prevents the powder B from reacting at a low temperature to form a second phase, and prevents the powder B from generating impurities in the final high-temperature sintering. Besides, because the pre-sintering does not reach the reaction temperature, so there is no chemical reaction at this period.

In operation (4), the block with reduced sintering activity in operation (3) is ground and then further sieved to obtain powder D with a small particle size. The powder D with a small particle size plays a role in nucleation in the reaction between the rare earth oxide and the tantalum oxide. During the reaction of rare earth oxide and tantalum oxide, multiple powders D may be used as crystal nuclei for nucleation and growth. In the meantime, grinding and sieving are used in this operation to make the particle size distribution of powder D to be uniform, the size distribution of the crystal nuclei formed by rare earth oxide and tantalum oxide is also uniform, and there will be no too large or too small crystal grains formed during the whole reaction process, so that the particle size distribution of the final rare earth tantalate ceramic grains is uniform.

It should be noted that when excessively large grains are formed during the reaction (a large crystal nucleus will cause such a situation), these large grains will grow up quickly and squeeze smaller grains, so in the final ceramic crystal structure, the grain boundary energy between large and small grains is too high, making point defects (pores) or line defects (microcracks) easy to appear at the grain boundaries, resulting in a decrease in the corrosion resistance of ceramics to low melting point oxides.

To shorten the preparation time, the powder is usually sintered at a high temperature directly after the powder is ground and mixed in the conventional technology, to obtain the final required ceramic. This is why the conventional ceramics sintered at a high temperature contain many microcracks and pores in the crystal structure.

For the rare earth tantalate ceramic powder or bulk material obtained in operation (5), since the crystal structure of the ceramic material has a small content of microcracks or pores, it is difficult for the molten oxide to enter the crystal of the ceramic material at a high temperature, so it has good corrosion resistance to low melting point oxides.

Further, in operation (1), a time of ball milling ranges from 10 to 24 h, and a rotation speed of the ball mill ranges from 300 to 600 r/min.

Beneficial effects: The RE₂O₃ powder and Ta₂O₅ powder can be fully mixed uniformly by adopting the ball milling speed and time in this technical solution.

Further, in operation (1), a drying temperature ranges from 60 to 100 °C, and a drying time ranges from 5 to 15 h.

Beneficial effects: adopting the drying temperature and time in this technical solution can fully volatilize the solvent in the powder.

Further, meshes for the first sieving in operation (1) range from 100 to 300 meshes, and meshes for the second sieving in operation (4) range from 300 to 600 meshes.

Beneficial effects: the above meshes in this technical solution are used for sieving, so that the finally obtained powder D has a small particle size and a uniform particle size distribution, thereby improving the sintering compactness of the powder.

Further, in operation (4), a rotation speed of the grinder ranges from 1000 to 2000 r/min, and a grinding time ranges from 20 to 48 h.

Beneficial effects: the block C is ground using the grinding parameters in this technical solution, and the obtained powder D has a small particle size and a uniform particle size distribution.

Further, a purity of the RE₂O₃ powder and the Ta₂O₅ powder in operation (1) is not less than 99.9%.

Beneficial effects: the use of high-purity precursor powder reduces the content of introduced impurity elements, prevents the introduction of impurity elements into the crystals to form microcracks, and reduces the compactness of the final sintered mass.

Further, the solvent in operation (1) is ethanol or distilled water.

Beneficial effects: ethanol and distilled water have good dispersibility for RE₂O₃ powder and Ta₂O₅ powder, so that RE₂O₃ powder and Ta₂O₅ powder can be more fully mixed.

Further, a molar ratio of the RE₂O₃ powder and Ta₂O₅ powder to the solvent in operation (1) ranges from 3:1 to 5:1.

Beneficial effects: The inventors have verified through experiments that when the ratio of RE₂O₃ powder and Ta₂O₅ powder to the solvent is in this range, the obtained powder A is most fully mixed.

The present disclosure further provides a method for preparing a rare earth ytterbium tantalate ceramic resisting corrosion of a low melting point oxide. The method includes:
operation (1): weighing Yb₂O₃ powder and Ta₂O₅ powder with a molar ratio of Yb:Ta being 1:1 or 3:1 and adding to a solvent to mix, and ball milling the mixed solution with a ball mill to obtain powder A;
operation (2): drying the powder A obtained in operation (1), and sieving the powder A for a first time to obtain powder B;
operation (3): placing the powder B obtained in operation (2) in a mold for compaction, holding a pressure, and pre-sintering the powder B to form a block C, a holding pressure ranges from 100 to 200 MPa, a holding-pressure time ranges from 10 to 20 min, a pre-sintering temperature ranges from 1000 to 1200 °C, and a pre-sintering time ranges from 10 to 20 h;
operation (4): cooling the block C in operation (3) to room temperature, grounding the block C with a grinder, and sieving the block C for a second time to obtain powder D; and
operation (5): sintering the powder D in operation (4) to obtain the rare earth ytterbium tantalate ceramic resisting corrosion of the low melting point oxide, a sintering temperature ranges from 1700 to 1800 °C, and a pressure sintering time ranges from 5 to 10 h.

Beneficial effects: The ytterbium tantalate (YbTaO₄ or Yb₃TaO₇) ceramic block with a density greater than 98% is obtained through the processes of operation (1) to operation (5). The obtained ceramic has fewer internal micro-cracks and low porosity, and can resist the corrosion of low melting point CMAS oxide at high temperature when used as a thermal barrier coating.

The Yb₂O₃ powder and Ta₂O₅ powder are mixed uniformly through operation (1), and the addition of solvent can reduce the surface activity of the Yb₂O₃ powder and Ta₂O₅ powder and reduce the adhesion between the powders.

The solvent in powder A is removed through operation (2), while sieving out the large particles that may be bonded together in operation (1) to ensure the compactness of the final sintered mass.

The gas in powder B can be discharged under pressure by holding the pressure of powder B in operation (3), thereby reducing the pores in the crystal structure of block C. A part of the internal energy in the powder can be consumed through pre-sintering, thereby reducing the sintering activity of powder B, increasing the reaction temperature of powder B, which prevents the powder B from reacting at a low temperature to form a second phase, and prevents the powder B from generating impurities in the final high-temperature sintering. Besides, because the pre-sintering does not reach the reaction temperature, so there is no chemical reaction at this period.

In operation (4), the block with reduced sintering activity in operation (3) is ground and then further sieved to obtain powder D with a small particle size. The powder D with a small particle size plays a role in nucleation in the reaction between the ytterbium oxide and the tantalum oxide. During the reaction of ytterbium oxide and tantalum oxide, multiple powders D may be used as crystal nuclei for nucleation and growth. In the meantime, grinding and sieving are used in this operation to make the particle size distribution of powder D to be uniform, the size distribution of the crystal nuclei formed by ytterbium oxide and tantalum oxide is also uniform, and there will be no too large or too small crystal grains formed during the whole reaction process, so that the particle size distribution of the final rare earth tantalate ceramic grains is uniform. It should be noted that when excessively large grains are formed during the reaction (a large crystal nucleus will cause such a situation), these large grains will grow up quickly and squeeze smaller grains, so in the final ceramic crystal structure, the grain boundary energy between large and small grains is too high, making point defects (pores) or line defects (microcracks) easy to appear at the grain boundaries, resulting in a decrease in the corrosion resistance of ceramics to low melting point oxides. To shorten the preparation time, the powder is usually sintered at a high temperature directly after the powder is ground and mixed in the conventional technology, to obtain the final required ceramic. This is why the conventional ceramics sintered at a high temperature contain many microcracks and pores in the crystal structure.

The ytterbium tantalate ceramic with a density greater than 97% is obtained through sintering in operation (5). The crystal structure of the ceramic has fewer pores, uniform crystal grain size distribution, and very few internal microcracks, which is the key to resist the corrosion of low melting point oxides at a high temperature.

Further, in operation (1), a time of ball milling ranges from 10 to 24 h, and a rotation speed of the ball mill ranges from 300 to 500 r/min.

Beneficial effects: The Yb₂O₃ powder and Ta₂O₅ powder can be fully mixed uniformly by adopting the ball milling speed and time in this technical solution.

Further, in operation (2), a drying temperature ranges from 50 to 200 °C, and a drying time ranges from 8 to 24 h.

Beneficial effects: adopting the drying temperature and time in this technical solution can fully volatilize the solvent in the powder.

Further, meshes for the first sieving in operation (1) range from 100 to 300 meshes.

Beneficial effects: the meshes in this technical solution are used for sieving, and the large-diameter powder particles bonded together in the ball milling process in powder A are sieved to obtain powder A with a uniform powder particle size distribution.

Further, meshes for the second sieving in operation (4) range from 300 to 600 meshes. Beneficial effects: the meshes in this technical solution are used for sieving, and the large-diameter powder particles that are not completely ground during the grinding process are sieved to obtain powder D with a uniform powder particle size distribution, thereby improving the density of the sintered mass.

Further, in operation (4), a rotation speed of the grinder ranges from 1000 to 2000 r/min, and a grinding time ranges from 20 to 48 h.

Beneficial effects: the block C is ground using the grinding parameters in this technical solution, and the obtained powder D has a small particle size and a uniform particle size distribution.

Further, a purity of the Yb₂O₃ powder and the Ta₂O₅ powder in operation (1) is not less than 99.9%.

Beneficial effects: the use of high-purity precursor powder reduces the content of introduced impurity elements, prevents the introduction of impurity elements into the crystals to form microcracks, and reduces the compactness of the final sintered mass.

Further, the solvent in operation (1) is ethanol or distilled water.

Beneficial effects: ethanol and distilled water have good dispersibility for Yb₂O₃ powder and Ta₂O₅ powder, so that Yb₂O₃ powder and Ta₂O₅ powder can be more fully mixed.

Further, a molar ratio of the Yb₂O₃ powder and Ta₂O₅ powder to the solvent in operation (1) ranges from 3:1 to 5:1.

Beneficial effects: The inventors have verified through experiments that when the ratio of Yb₂O₃ powder and Ta₂O₅ powder to the solvent is in this range, the obtained powder A is most fully mixed.

### BRIEF DESCRIPTION OF THE DRAWINGS

Fig. 1 shows an XRD diagram of a rare earth tantalate (HoTaO₄) ceramic prepared in Example 5 according to the present disclosure.
Fig. 2 shows an SEM diagram of a rare earth tantalate (HoTaO₄) ceramic prepared in Example 5 according to the present disclosure.
Fig. 3 shows a diagram of a rare earth tantalate (HoTaO₄) ceramic prepared in Example 5 after a CMAS high temperature corrosion resistance test according to the present disclosure.
Fig. 4 shows a diagram of a rare earth tantalate (ErTaO₄) ceramic prepared in Example 6 after a CMAS high temperature corrosion resistance test according to the present disclosure.
Fig. 5 shows an XRD diagram of a rare earth tantalate (RETaO₄) ceramic prepared in Examples 1 to 6 after a CMAS high temperature corrosion resistance test according to the present disclosure.
Fig. 6 shows an XRD diagram of a Ytterbium tantalate (YbTaO₄) ceramic prepared in Example 13 according to the present disclosure.
Fig. 7 shows an SEM diagram of a Ytterbium tantalate (YbTaO₄) ceramic prepared in Example 13 according to the present disclosure.
Fig. 8 shows a diagram of a Ytterbium tantalate (YbTaO₄) ceramic prepared in Example 13 after a CMAS high temperature corrosion resistance test at 1300°C for 10 hours according to the present disclosure.
Fig. 9 shows an XRD diagram of a Ytterbium tantalate (YbTaO₄) ceramic prepared in Example 13 for alumina compatibility detection according to the present disclosure.

### DETAILED DESCRIPTION

The embodiments of the present disclosure will be described in further detail below.

The present disclosure provides a rare earth tantalate ceramic resisting corrosion of a low melting point oxide. A general chemical formula of the ceramic is RETaO₄. RE is one or a combination of Sm, Eu, Gd, Dy, Ho, and Er. A crystal structure of the ceramic has a monoclinic phase, a lattice space group of the ceramic is 12(5), and a density of the ceramic is greater than 98%.

The present disclosure provides a method for preparing the rare earth tantalate ceramic resisting corrosion of the low melting point oxide. The method includes the following operations:
Operation (1): weighing RE₂O₃ powder and Ta₂O₅ powder with a molar ratio of RE:Ta being 1:1 and adding to a distilled water or ethanol solvent to mix, where a molar ratio of the RE₂O₃ powder and Ta₂O₅ powder to solvent ranges from 3:1 to 5:1, ball milling the mixed solution with a ball mill, and drying the mixed solution to obtain powder A. The ball mill may be a frequency conversion planetary ball mill, and the model of the ball mill may be XQM. A ball milling time ranges from 10 to 24 h, a rotation speed of the ball mill ranges from 300 to 600 r/min, and a purity of the raw materials, that is, the RE₂O₃ powder and Ta₂O₅ powder, is not less than 99.9%.
Operation (2): drying the powder A obtained in operation (1), and sieving the powder A for a first time to obtain powder B, where a drying temperature ranges from 60 to 100 °C, a drying time ranges from 5 to 15h, and meshes for the first sieving ranges 100 to 300 meshes.
Operation (3): placing the powder B obtained in operation (2) in a mold for compaction, holding a pressure, and pre-sintering the powder B to form a block C, where a holding pressure ranges from 200 to 300 MPa, a holding-pressure time ranges from 1 to 10 min, a pre-sintering temperature ranges from 800 to 1200 °C, a pre-sintering time ranges from 10 to 20 h, and a heating rate is 100°C/min.
Operation (4): cooling the block C in operation (3) to room temperature; grounding the block C with a grinder, where the grinder may be a vertical laboratory sand mill, the model of the grinder may be WT0.3, a grinding speed ranges from 1000 to 2000 r/min, and a grinding time ranges from 20 to 48 h; and sieving the block C for a second time to obtain powder D, where meshes for the second sieving range from 300 to 600 meshes.
Operation (5): sintering the powder D in operation (4) to obtain the above rare earth tantalate ceramic resisting corrosion of the low melting point oxide, where a sintering temperature ranges from 1500 to 1800 °C, a heating rate is 50 °C/min, and a sintering time ranges from 5 to 30 h. The obtained powder material can be used for spraying to form a thermal barrier coating after granulation.

When the performance of the ceramic needs to be tested, a bulk structure of the ceramic needs to be obtained, and a pressure treatment is carried out during the sintering in the above operation (5), where a pressure ranges from 40 to 100 MPa, and a pressuring time ranges from 5 to 30 min. In this way, a ceramic bulk material with the same composition and crystal structure as the powder is formed.

A RETaO₄ ceramic with a density greater than 98% is obtained using the above method. 12 sets of examples are selected to fully illustrate the compactness of the RETaO₄ ceramic prepared by the above method.

Table 1 shows the specific parameters of Examples 1 to 6 of the present disclosure:

| Examples | | 1 | 2 | 3 | 4 | 5 | 6 |
|---|---|---|---|---|---|---|---|
| RE₂O₃ (g) | Sm₂O₃ | 5.0000 | | | | | |
| | Eu₂O₃ | | 7.6566 | | | | |
| | Gd₂O₃ | | | 7.8872 | | | |
| | Dy₂O₃ | | | | 8.1134 | | |
| | Ho₂O₃ | | | | | 5.0000 | |
| | Er₂O₃ | | | | | | 6.6578 |
| Ta₂O₅ (g) | | 6.331 | 9.6100 | 9.6100 | 9.6100 | 5.8470 | 7.6880 |
| Ball milling | Rotation speed (r/min) | 300 | 420 | 300 | 300 | 350 | 400 |
| | Time (h) | 12 | 10 | 24 | 12 | 13 | 15 |
| Drying | Temperature (°C) | 70 | 92 | 75 | 100 | 80 | 90 |
| | Time (h) | 12 | 8 | 12 | 5 | 11 | 9 |
| First sieving | Meshes | 300 | 200 | 300 | 300 | 200 | 200 |
| First compaction | Holding pressure (MPa) | 200 | 260 | 280 | 290 | 220 | 250 |
| | Holding pressure time (min) | 5 | 9 | 10 | 10 | 3 | 2 |
| Pre-sintering | Sintering temperature (°C) | 1000 | 1200 | 1000 | 1150 | 1100 | 1050 |
| | Sintering time (h) | 12 | 10 | 12 | 11 | 11 | 10 |
| Grinding | Rotation speed (r/min) | 2000 | 1500 | 1300 | 1000 | 1300 | 1800 |
| | Time (h) | 20 | 30 | 40 | 48 | 40 | 25 |
| Second sieving | Meshes | 600 | 500 | 500 | 600 | 300 | 400 |
| Powder sintering | Sintering temperature (°C) | 1300 | 1500 | 1450 | 1800 | 1400 | 1500 |
| | Sintering time (h) | 30 | 15 | 17 | 5 | 20 | 15 |
| Block sintering | Pressure (MPa) | 100 | 50 | 40 | 60 | 70 | 50 |
| | Pressuring time (min) | 5 | 20 | 30 | 12 | 8 | 20 |

Table 2 shows the specific parameters of Examples 7 to 12 of the present disclosure:

| Examples | | 7 | 8 | 9 | 10 | 11 | 12 |
|---|---|---|---|---|---|---|---|
| RE₂O₃ (g) | Sm₂O₃ | | 6.7840 | | 6.6970 | | |
| | Eu₂O₃ | | | | | 6.3220 | |
| | Gd₂O₃ | 6.8240 | | | 6.6970 | | 6.1990 |
| | Dy₂O₃ | 6.8240 | | 7.0090 | | 6.3220 | |
| | Ho₂O₃ | | | | | 6.3220 | 6.1990 |
| | Er₂O₃ | | 6.7840 | 7.0090 | | | |
| Ta₂O₅ (g) | | 8.2000 | 8.2000 | 8.2000 | 8.2000 | 7.6000 | 7.4000 |
| Ball milling | Rotation speed (r/min) | 400 | 420 | 500 | 500 | 600 | 550 |
| | Time (h) | 12 | 24 | 12 | 12 | 10 | 15 |
| Drying | Temperature (°C) | 60 | 70 | 70 | 100 | 80 | 90 |
| | Time (h) | 15 | 13 | 13 | 6 | 10 | 8 |
| First sieving | Meshes | 300 | 100 | 300 | 300 | 200 | 200 |
| First compaction | Holding pressure (MPa) | 200 | 260 | 300 | 290 | 220 | 250 |
| | Holding pressure time (min) | 5 | 9 | 1 | 10 | 5 | 6 |
| Pre-sintering | Sintering temperature (°C) | 800 | 1200 | 1000 | 900 | 1100 | 1150 |
| | Sintering time (h) | 20 | 10 | 15 | 16 | 10 | 13 |
| Grinding | Rotation speed (r/min) | 2000 | 1500 | 1300 | 1000 | 1300 | 1800 |
| | Time (h) | 20 | 30 | 40 | 48 | 40 | 25 |
| Second sieving | Meshes | 600 | 500 | 500 | 600 | 400 | 400 |
| Powder sintering | Sintering temperature (°C) | 1300 | 1500 | 1450 | 1800 | 1400 | 1500 |
| | Sintering time (h) | 30 | 15 | 17 | 5 | 20 | 15 |
| Block sintering | Pressure (MPa) | 100 | 50 | 40 | 60 | 70 | 50 |
| | Pressuring time (min) | 5 | 20 | 30 | 12 | 8 | 20 |

Two sets of control examples are listed and compared with the rare earth tantalate ceramics obtained in Examples 1-12:

Control example 1: The difference from Example 1 is that the above operations (3) and (4) are not performed in control example 1.

Control example 2: The difference from Example 1 is that the sintering temperature in operation (5) ranges from 1100 to 1300° C, and the sintering time ranges from 3 to 5 hours in control example 2.

The ceramic blocks obtained in Examples 1 to 12 and control examples 1 to 2 are now tested:

### 1. XRD characterization:

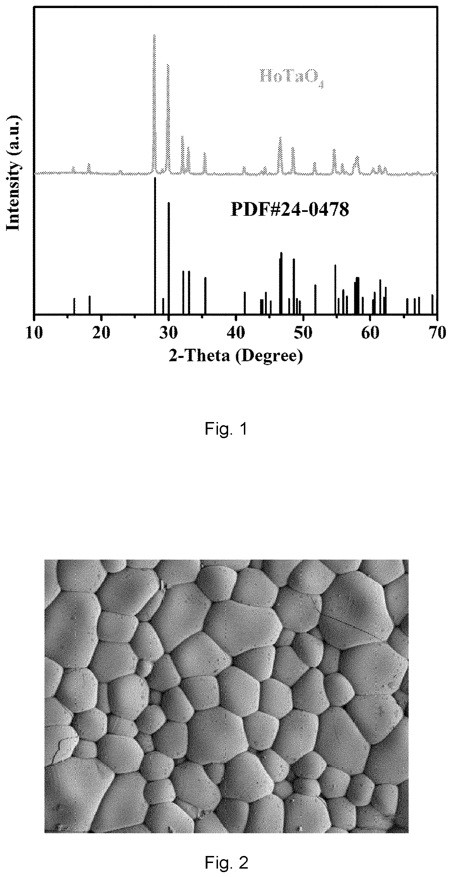

An X-ray diffractometer was used to test the ceramic blocks prepared in Examples 1-12 and control examples 1-2. Take the rare earth tantalate (HoTaO₄) ceramic block obtained in Example 5 as an example, the XRD pattern is shown in Fig. 1. The diffraction peaks in the XRD test results of the HoTaO₄ ceramic sample in Fig. 1 correspond to the standard peaks of the standard PDF card #24-0478, and there is no second-phase diffraction peak, indicating that the prepared sample is a single-phase HoTaO₄ ceramic, its crystal structure has a monoclinic phase, where α=γ=90° and β=95.5°, the density is 9.71 g/cm3, and the lattice space group is 12(5). In the meantime, XRD detection shows that the rare earth tantalic (HoTaO₄) ceramic block has no other impurities.

### 2. SEM characterization:

The ceramic blocks prepared in Examples 1 to 12 and control examples 1 to 2 were detected by a scanning electron microscopy (SEM). Take the rare earth tantalate (HoTaO₄) ceramic block prepared in Example 5 as an example. The SEM spectrum is shown in Fig. 2. The SEM spectrum in Fig. 2 shows that the HoTaO₄ ceramic sample has good crystallization, uniform crystal grain size, and clear grain boundaries, and no second phase is seen within a crystal grain or between the crystal grains, which is consistent with the XRD results. Fig. 2 shows that there are very few cracks and pores in the rare earth tantalate (HoTaO₄) ceramic block, indicating that the ceramic does not generate excessive pressure and stress during the sintering process, and a density reaches 99.1%.

The ceramic blocks obtained in control example 1 and control example 2 contain many pores. In particular, the ceramic block obtained in control example 1 contains a certain amount of inclusions (not fully sintered RE₂O₃ and Ta₂O₅ powders) in addition to many pores, making more microcracks appear inside the crystal.

### 3. Density detection:

The ceramic blocks prepared in Examples 1 to 12 and control examples 1 to 2 were measured using an Archimedes drainage method. The measurement results are shown in Table 3. It can be seen that the densities of ceramic blocks obtained in Examples 1 to 12 are greater than 98%.

Table 3 shows the densities measured in Examples 1 to 12 and control examples 1 to 2.

| | Example 1 | Example 2 | Example 3 | Example 4 | Example 5 | Example 6 | Example 7 |
|---|---|---|---|---|---|---|---|
| Densit y (%) | 99.2 | 99.14 | 99.25 | 99.15 | 99.1 | 98.2 | 98.9 |

| | Example 8 | Example 9 | Example 10 | Example 11 | Example 12 | control example 1 | control example 2 |
|---|---|---|---|---|---|---|---|
| Densit y (%) | 98.5 | 98.1 | 98.7 | 98.4 | 98.3 | 76.2 | 81.2 |

### 3. High temperature resistance CMAS corrosion test:

### 3.1 CMAS preparation

After mixing aluminum oxide (Al₂O₃), magnesium oxide (MgO), calcium oxide (CaO) and silicon oxide (SiO₂) in a molar ratio of 15:19:22:44, the mixed oxides were added to distilled water, and ground and mixed in a grinder to obtain a uniform and fine powder, where the speed of the grinder was 1000 r/min, and the grinding time was 20 h. The ground powder was dried at 100° C for 10 hours and pre-sintered at 1000° C for 5 hours to obtain a block, and then the block was ground and sieved by a 300-mesh sieve to obtain a uniform CMAS powder.

The CMAS powder prepared by the above method shows the proportion of CMAS components in the front inlet of the engine turbine when the aero engine works in a harsh environment.

### 3.2 Corrosion test

The above CMAS powder was laid on the surface of the rare earth tantalate ceramic (RETaO₄) blocks prepared in Examples 1-12, where the amount of CMAS powder was 15 mg/cm2, and then high-temperature sintering was performed at a sintering temperature of 1200-1500 °C, a holding-temperature time ranges from 5 to 20 h.

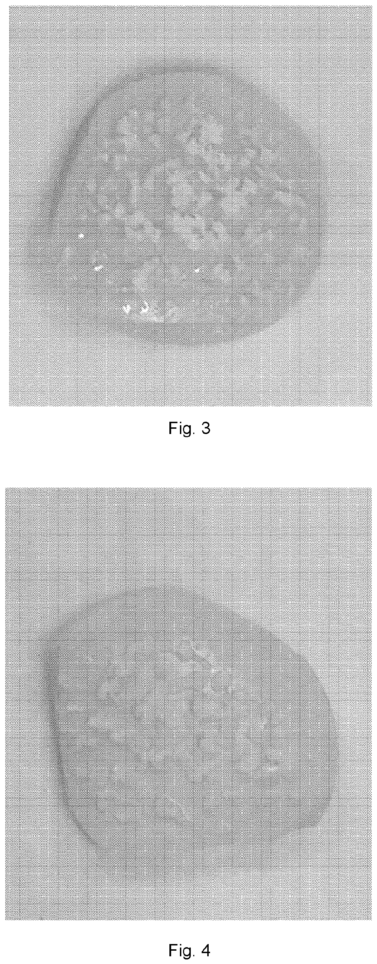

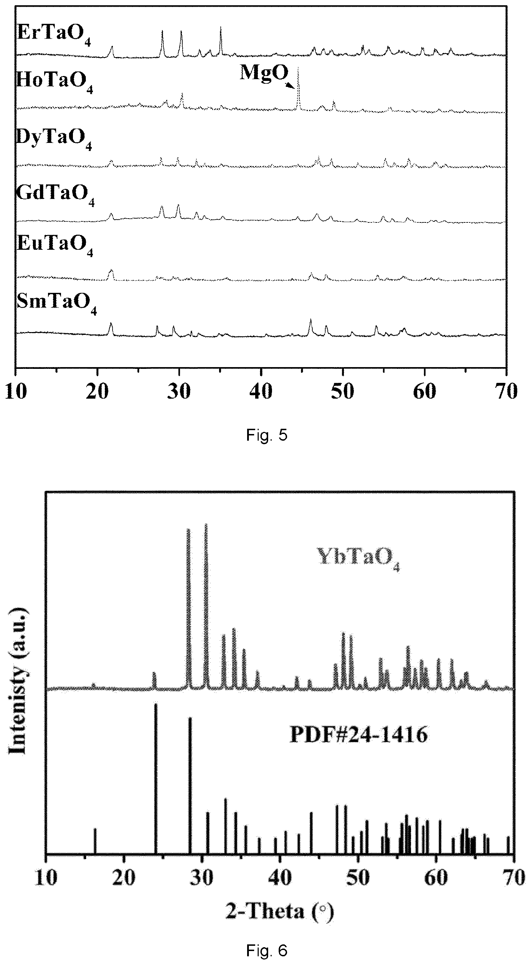

Take Examples 1 to 6 as an example, Fig. 3 shows a diagram of the rare earth tantalate (HoTaO₄) ceramic prepared in Example 5 after being sintered at 1300°C for 6 hours in the CMAS high temperature corrosion resistance test. Fig. 4 shows a diagram of the rare earth tantalate (ErTaO₄) ceramic prepared in Example 6 after being sintered at 1500°C for 13 hours in the CMAS high temperature corrosion resistance test. The blocks with a pie shape in the above-mentioned figures are the sintered ceramic blocks, and the particles on the surface of the blocks are CMAS powder. In the meanwhile, XRD detection was performed on the rare earth tantalate (RETaO₄) blocks obtained in Examples 1 to 6, and the XRD pattern is shown in Fig. 5.

Referring to Figs. 3-5, it can be seen that there is still a large amount of CMAS powder on the surface of each ceramic sample. The melting point of the CMAS powder is lower than 1200°C. After holding temperature for several hours at high temperature (greater than 1200°C), it shows that the molten CMAS liquid has not reacted with the ceramic material, and it is difficult to penetrate the ceramic material, only a small amount of MgO is detected in the rare earth tantalate (ErTaO₄) ceramic obtained in Example 8, indicating that CMAS is difficult to react with the rare earth tantalate ceramic material at this temperature, which proves the excellent CMAS corrosion resistance characteristics of ceramic materials. Normally, after other ceramic materials that are not resistant to CMAS corrosion, such as YSZ, are kept at a high temperature for several hours, the molten CMAS liquid reacts with YSZ and penetrates the ceramic, leaving no CMAS powder remaining on the surface.

In summary, the rare earth tantalate (RETaO₄) ceramics prepared in Examples 1 to 12 have very few microcracks and pores in the crystal structure, resulting in high density, which is above 98%. The ceramics have good corrosion resistance to low melting point oxides. When the temperature reaches 1200-1500 °C, the rare earth tantalate (RETaO₄) ceramic block hardly reacts with the CMAS powder, and its high temperature CMAS corrosion resistance is much greater than that of YSZ.

The present disclosure further provides a rare earth ytterbium tantalate ceramic resisting corrosion of a low melting point oxide. A general chemical formula of the ceramic is YbTaO₄ or Yb₃TaO₇. A crystal structure of the YbTaO₄ ceramic has a monoclinic phase, a lattice space group of the YbTaO₄ ceramic is 12(5). A crystal structure of the Yb₃TaO₇ ceramic has a cubic phase, a lattice space group of the Yb₃TaO₇ ceramic is Fm-3m. The densities of the above two ceramics are both greater than 97%.

The present disclosure provides a method for preparing the rare earth tantalate ceramic resisting corrosion of the low melting point oxide. The method includes the following operations:
Operation (1): weighing Yb₂O₃ powder and Ta₂O₅ powder with a molar ratio of Yb:Ta being 1:1 and adding to a distilled water or ethanol solvent to mix, where a molar ratio of the Yb₂O₃ powder and Ta₂O₅ powder to solvent ranges from 3:1 to 5:1, ball milling the mixed solution with a ball mill, and drying the mixed solution to obtain powder A. The ball mill may be a frequency conversion planetary ball mill, and the model of the ball mill may be XQM. A ball milling time ranges from 10 to 24 h, a rotation speed of the ball mill ranges from 300 to 500 r/min, and a purity of the raw materials, that is, the Yb₂O₃ powder and Ta₂O₅ powder, is not less than 99.9%.
Operation (2): drying the powder A obtained in operation (1), and sieving the powder A for a first time to obtain powder B, where a drying temperature ranges from 50 to 200 °C, a drying time ranges from 8 to 24 h, and meshes for the first sieving ranges 100 to 300 meshes.
Operation (3): placing the powder B obtained in operation (2) in a mold for compaction, holding a pressure, and pre-sintering the powder B to form a block C, where a holding pressure ranges from 100 to 200 MPa, a holding-pressure time ranges from 10 to 20 min, a pre-sintering temperature ranges from 1000 to 1200 °C, a pre-sintering time ranges from 10 to 20 h, and a heating rate is 100°C/min.
Operation (4): cooling the block C in operation (3) to room temperature; grounding the block C with a grinder, where the grinder may be a vertical laboratory sand mill, the model of the grinder may be WT0.3, a grinding speed ranges from 1000 to 2000 r/min, and a grinding time ranges from 20 to 48 h; and sieving the block C for a second time to obtain powder D, where meshes for the second sieving range from 300 to 600 meshes.
Operation (5): sintering the powder D in operation (4) to obtain the above rare earth ytterbium tantalate ceramic powder with different stoichiometric ratios and resisting corrosion of the low melting point oxide, where a sintering temperature ranges from 1700 to 1800 °C, a heating rate is 50 °C/min, and a sintering time ranges from 5 to 10h. The obtained powder material can be directly used for spraying to form a thermal barrier coating after granulation.

When the performance of the ceramic needs to be tested, a bulk structure of the ceramic needs to be obtained, and a pressure treatment is carried out during the sintering in the above operation (5), where a pressure ranges from 200 to 300 MPa, and a pressuring time ranges from 20 to 30 min.

A ytterbium tantalate ceramic (YbTaO₄ or Yb₃TaO₇) with a density greater than 97% is obtained using the above method. 6 sets of examples are selected to fully illustrate the compactness of the ytterbium tantalate ceramic prepared by the above method.

Table 4 shows the specific parameters of Examples 13 to 18 of the present disclosure:

| Examples | | 13 | 14 | 15 | 16 | 17 | 18 |
|---|---|---|---|---|---|---|---|
| Yb₂O₃(g) | | 3.5672 | 10.7016 | 3.5672 | 10.7016 | 3.5672 | 10.7016 |
| Ta₂O₅(g) | | 4.000 | 4.000 | 4.000 | 4.000 | 4.000 | 4.000 |
| Ball milling | Rotation speed (r/min) | 500 | 400 | 300 | 500 | 400 | 450 |
| | Time (h) | 10 | 20 | 24 | 10 | 20 | 15 |
| Drying | Temperature (°C) | 120 | 90 | 50 | 150 | 200 | 100 |
| | Time (h) | 10 | 10 | 24 | 15 | 8 | 18 |
| First sieving | Meshes | 300 | 200 | 300 | 300 | 100 | 200 |
| First | Holding | 100 | 200 | 150 | 200 | 100 | 200 |
| compaction | pressure (MPa) | | | | | | |
| | Holding pressure time (min) | 10 | 12 | 16 | 10 | 20 | 10 |
| Pre-sintering | Sintering temperature (°C) | 1000 | 1100 | 1200 | 1150 | 1200 | 1100 |
| | Sintering time (h) | 20 | 15 | 10 | 12 | 10 | 20 |
| Grinding | Rotation speed (r/min) | 2000 | 1500 | 1300 | 1000 | 1300 | 1800 |
| | Time (h) | 20 | 30 | 40 | 48 | 40 | 25 |
| Second sieving | Meshes | 600 | 500 | 500 | 600 | 300 | 500 |
| Powder sintering | Sintering temperature (°C) | 1800 | 1700 | 1750 | 1780 | 1790 | 1700 |
| | Sintering time (h) | 5 | 10 | 8 | 6 | 6 | 9 |
| Block sintering | Molding pressure (MPa) | 300 | 300 | 200 | 250 | 200 | 300 |
| | Compression time (min) | 20 | 20 | 30 | 25 | 30 | 20 |

Two sets of control examples are listed and compared with the ytterbium tantalate ceramics obtained in Examples 13-18:

Control example 3: The difference from Example 13 is that the above operations (3) and (4) are not performed in control example 3.

Control example 4: The difference from Example 13 is that the sintering temperature in operation (5) ranges from 1200 to 1400° C in control example 4.

The ceramic blocks obtained in Examples 13 to 18 and control examples 3 to 4 are now tested:

### 1. XRD characterization:

An X-ray diffractometer was used to test the ceramic blocks prepared in Examples 13-18 and control examples 3-4. Take the ytterbium tantalate (YbTaO₄) ceramic block obtained in Example 13 as an example, its XRD pattern is shown in Fig. 6. The diffraction peaks of the ytterbium tantalate (YbTaO₄) ceramic block in Fig. 6 correspond to the standard peaks of the standard PDF card #24-1010, and there is no second-phase diffraction peak, indicating that the prepared sample is a single-phase ytterbium tantalate (YbTaO₄) ceramic, its crystal structure has a monoclinic phase, where α=γ=90° and β=95.7°, and the lattice space group is 12(5). In the meantime, XRD detection shows that the ytterbium tantalate (YbTaO₄) ceramic block has no other impurities.

### 2. SEM characterization:

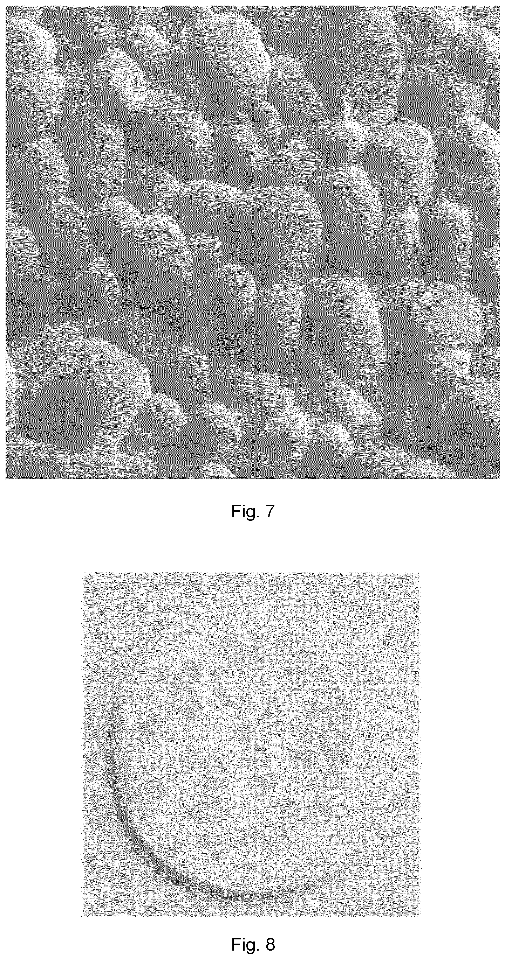

The ceramic blocks prepared in Examples 13 to 18 and control examples 3 to 4 were detected by a scanning electron microscopy. Take the ytterbium tantalate (YbTaO₄) ceramic block prepared in Example 13 as an example, its SEM spectrum is shown in Fig. 7. The SEM spectrum in Fig. 7 shows that the ytterbium tantalate (YbTaO₄) ceramic sample has good crystallization, uniform crystal grain size, and clear grain boundaries, and no second phase is seen within or between the crystal grains, which is consistent with the XRD results. Fig. 7 shows that there are very few cracks and pores in the ytterbium tantalate (YbTaO₄) ceramic block, indicating that the ceramic does not generate excessive pressure and stress during the sintering process, and a density reaches 98.1%.

The ceramic blocks obtained in control example 3 and control example 4 contain many pores. In particular, the ceramic block obtained in control example 3 contains a certain amount of inclusions (not fully sintered Y₂O₃ and Ta₂O₅ powders) in addition to many pores, making more microcracks appear inside the crystal.

### 3. Density detection:

The ceramic blocks prepared in Examples 13 to 18 and control examples 3 to 4 were measured using the Archimedes drainage method. The measurement results are shown in Table 2. It can be seen that the densities of ceramic blocks obtained in Examples 13 to 18 are greater than 97%.

Table 5 shows the densities of the ceramic blocks prepared in Examples 13 to 18 and control examples 3 to 4.

| | Examples | | | | | | | Control examples |
|---|---|---|---|---|---|---|---|---|
| | 13 | 14 | 15 | 16 | 17 | 18 | 3 | 4 |
| Density (%) | 98.1 | 97.7 | 97.1 | 97.4 | 97.1 | 97.6 | 61.3 | 72.1 |

### 4. High temperature resistance CMAS corrosion test:

### 4.1 CMAS preparation

After mixing aluminum oxide (Al₂O₃), magnesium oxide (MgO), calcium oxide (CaO), and silicon oxide (SiO₂) in a molar ratio of 15:19:22:44, the mixed oxides were added to distilled water, and ground and mixed in a grinder to obtain a uniform and fine powder, where the speed of the grinder ranges from 1000 to 2000 r/min, and the grinding time ranges from 20 to 48 h. The ground powder was dried at 100-200 ° C for 10-20 hours and pre-sintered at 1000-1400 ° C for 5-10 hours to obtain a block, and then the block was ground and sieved by a sieve with 300-600 meshes to obtain a uniform CMAS powder.

The CMAS powder prepared by the above method shows the proportion of CMAS components in the front inlet of the engine turbine when the aero engine works in a harsh environment.

### 4.2 Corrosion test

The above CMAS powder was laid on the surface of the ytterbium tantalate ceramic blocks prepared in Examples 13-18, where the amount of CMAS powder was 35 mg/cm2, and then high-temperature sintering was performed at a sintering temperature of 1200-1500 °C, a holding-temperature time ranges from 5 to 20 h.

Take Example 13 as an example, Fig. 8 shows a diagram of the ytterbium tantalate (YbTaO₄) ceramic prepared in Example 13 after holding temperature at 1300°C for 10 hours in the CMAS high temperature corrosion resistance test. The block with a pie shape in Fig. 8 is the sintered ceramic block, and the particles on the surface of the block are CMAS powder. It can be seen that there is still a large amount of CMAS powder on the surface of each ceramic sample. The melting point of the CMAS powder is lower than 1200°C. After holding temperature for several hours at high temperature (greater than 1200°C), it shows that the molten CMAS liquid has not reacted with the ceramic material, and it is difficult to penetrate the ceramic material, indicating that CMAS is difficult to react with the rare earth tantalate ceramic material at this temperature, which proves the excellent CMAS corrosion resistance characteristics of ceramic materials. Normally, after other ceramic materials that are not resistant to CMAS corrosion, such as YSZ, are kept at a high temperature for several hours, the molten CMAS liquid reacts with YSZ and penetrates the ceramic, leaving no CMAS powder remaining on the surface.

### 5. Alumina compatibility

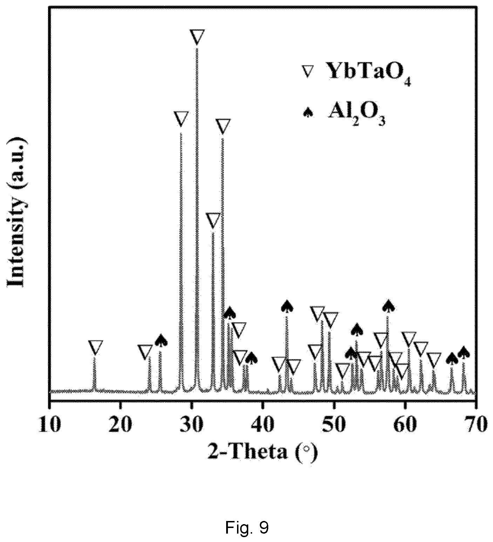

When a ceramic material is used as a thermal barrier coating on a substrate, it usually needs to be combined with the substrate through an adhesive layer, and the adhesive layer usually contains Al₂O₃. In the present disclosure, the ytterbium tantalate ceramic blocks obtained in Examples 13-18 were mixed with alumina powder and kept at 1200-1500°C for 7 hours. The obtained ceramic was subjected to XRD detection. Take the ytterbium tantalate (YbTaO₄) ceramic prepared in Example 13 as an example, and its XRD pattern is shown in Fig. 9. It shows that the alumina and ytterbium tantalate did not react, but existed as single-phase alumina and single-phase ytterbium tantalate, respectively. It can be proved that when ytterbium tantalate is used as a thermal barrier coating, it will not react with the alumina in the bonding layer, and has good alumina compatibility and high temperature chemical stability.

In summary, the ytterbium tantalate (YbTaO₄ or Yb₃TaO₇) ceramics prepared in Examples 13 to 18 have very few microcracks and pores in the crystal structure, resulting in high density, which is above 97%. The ceramics have good corrosion resistance to low melting point oxides. When the temperature reaches 1200-1500 °C, the ytterbium tantalate ceramic block hardly reacts with the CMAS powder, and its high temperature CMAS corrosion resistance is much greater than that of YSZ. Besides, when the powder is used as a thermal barrier coating, it will not react with alumina in the bonding layer, and has good alumina compatibility and high temperature chemical stability.

What has been described above is only an embodiment of the present disclosure, and common knowledge such as specific structures and characteristics that are well-known in the technical solutions are not described here. For those skilled in the art, several modifications and improvements can be made without departing from the structure of the present disclosure. These should also be regarded as the protection scope of the present disclosure, and these will not affect the effects of the implementation and unity of the present disclosure. The protection scope claimed in this application shall be subject to the content of the claims, and the embodiments in the specification can be used to interpret the contents of the claims.

## Claims

1. A rare earth tantalate ceramic resisting corrosion of a low melting point oxide, wherein a general chemical formula of the ceramic is RETaO₄, a crystal structure of the ceramic has a monoclinic phase, a lattice space group of the ceramic is 12(5), and a density of the ceramic is greater than 98%.

2. The rare earth tantalate ceramic resisting corrosion of the low melting point oxide according to claim 1, wherein RE is one or a combination of Sm, Eu, Gd, Dy, Ho, and Er.

3. A method for preparing the rare earth tantalate ceramic resisting corrosion of the low melting point oxide according to claim 2, comprising:
operation (1): weighing RE₂O₃ powder and Ta₂O₅ powder with a molar ratio of RE:Ta being 1:1 and adding to a solvent to mix, and ball milling the mixed solution with a ball mill to obtain powder A;
operation (2): drying the powder A obtained in operation (1), and sieving the powder A for a first time to obtain powder B;
operation (3): placing the powder B obtained in operation (2) in a mold for compaction, holding a pressure, and pre-sintering the powder B to form a block C, wherein a holding pressure ranges from 200 to 300 MPa, a holding-pressure time ranges from 1 to 10 min, a pre-sintering temperature ranges from 800 to 1200 °C, and a pre-sintering time ranges from 10 to 20 h;
operation (4): cooling the block C in operation (3) to room temperature, grounding the block C with a grinder, and sieving the block C for a second time to obtain powder D; and
operation (5): sintering the powder D in operation (4) to obtain the rare earth tantalate ceramic resisting corrosion of the low melting point oxide, wherein a sintering temperature ranges from 1500 to 1800 °C, and a pressure sintering time ranges from 5 to 30 min.

4. The method for preparing the rare earth tantalate ceramic resisting corrosion of the low melting point oxide according to claim 3, wherein in operation (1), a time of ball milling ranges from 10 to 24 h, and a rotation speed of the ball mill ranges from 300 to 600 r/min.

5. The method for preparing the rare earth tantalate ceramic resisting corrosion of the low melting point oxide according to claim 3, wherein in operation (2), a drying temperature ranges from 60 to 100°C, and a drying time ranges from 5 to 15 h.

6. The method for preparing the rare earth tantalate ceramic resisting corrosion of the low melting point oxide according to claim 3, wherein meshes for the first sieving in operation (2) range from 100 to 300 meshes, and meshes for the second sieving in operation (4) range from 300 to 600 meshes.

7. The method for preparing the rare earth tantalate ceramic resisting corrosion of the low melting point oxide according to claim 3, wherein in operation (4), a rotation speed of the grinder ranges from 1000 to 2000 r/min, and a grinding time ranges from 20 to 48 h.

8. The method for preparing the rare earth tantalate ceramic resisting corrosion of the low melting point oxide according to claim 7, wherein a purity of the RE₂O₃ powder and the Ta₂O₅ powder in operation (1) is not less than 99.9%.

9. The method for preparing the rare earth tantalate ceramic resisting corrosion of the low melting point oxide according to claim 3, wherein the solvent in operation (1) is ethanol or distilled water.

10. The method for preparing the rare earth tantalate ceramic resisting corrosion of the low melting point oxide according to claim 3, wherein a molar ratio of the RE₂O₃ powder and Ta₂O₅ powder to the solvent in operation (1) ranges from 3:1 to 5:1.

11. A rare earth ytterbium tantalate ceramic resisting corrosion of a low melting point oxide, wherein the ceramic is sintered from Yb₂O₃ powder and Ta₂O₅ powder, a general chemical formula of the ceramic is YbTaO₄ or Yb₃TaO₇, a crystal structure of the ceramic has a single phase, and a density of the ceramic is greater than 97%.

12. A method for preparing the rare earth ytterbium tantalate ceramic resisting corrosion of the low melting point oxide according to claim 11, comprising:
operation (1): weighing Yb₂O₃ powder and Ta₂O₅ powder with a molar ratio of Yb:Ta being 1:1 and adding to a solvent to mix, and ball milling the mixed solution with a ball mill to obtain powder A;
operation (2): drying the powder A obtained in operation (1), and sieving the powder A for a first time to obtain powder B;
operation (3): placing the powder B obtained in operation (2) in a mold for compaction, holding a pressure, and pre-sintering the powder B to form a block C, wherein a holding pressure ranges from 100 to 200 MPa, a holding-pressure time ranges from 10 to 20 min, a pre-sintering temperature ranges from 1000 to 1200 °C, and a pre-sintering time ranges from 10 to 20 h;
operation (4): cooling the block C in operation (3) to room temperature, grounding the block C with a grinder, and sieving the block C for a second time to obtain powder D; and
operation (5): sintering the powder D in operation (4) to obtain the rare earth ytterbium tantalate ceramic resisting corrosion of the low melting point oxide, wherein a sintering temperature ranges from 1700 to 1800 °C, and a pressure sintering time ranges from 5 to 10 h.

13. The method for preparing the rare earth ytterbium tantalate ceramic resisting corrosion of the low melting point oxide according to claim 12, wherein a time of ball milling in operation (1) ranges from 10 to 24 h, and a rotation speed of the ball mill ranges from 300 to 500 r/min.

14. The method for preparing the rare earth ytterbium tantalate ceramic resisting corrosion of the low melting point oxide according to claim 12, wherein a drying temperature in operation (2) ranges from 50 to 200°C, and a drying time ranges from 8 to 24 h.

15. The method for preparing the rare earth ytterbium tantalate ceramic resisting corrosion of the low melting point oxide according to claim 12, wherein meshes for the first sieving in operation (2) range from 100 to 300 meshes.

16. The method for preparing the rare earth ytterbium tantalate ceramic resisting corrosion of the low melting point oxide according to claim 12, wherein meshes for the second sieving in operation (4) range from 300 to 600 meshes.

17. The method for preparing the rare earth ytterbium tantalate ceramic resisting corrosion of the low melting point oxide according to claim 12, wherein in operation (4), a rotation speed of the grinder ranges from 1000 to 2000 r/min, and a grinding time ranges from 20 to 48 h.

18. The method for preparing the rare earth ytterbium tantalate ceramic resisting corrosion of the low melting point oxide according to claim 12, wherein a purity of the Yb₂O₃ powder and the Ta₂O₅ powder in operation (1) is not less than 99.9%.

19. The method for preparing the rare earth ytterbium tantalate ceramic resisting corrosion of the low melting point oxide according to claim 12, wherein the solvent in operation (1) is ethanol or distilled water.

20. The method for preparing the rare earth ytterbium tantalate ceramic resisting corrosion of the low melting point oxide according to any one of claims 12 to 19, wherein a molar ratio of the Yb₂O₃ powder and Ta₂O₅ powder to the solvent in operation (1) ranges from 3:1 to 5:1.
